# EUROPEAN PATENT SPECIFICATION

(11) **EP 3 376 192 B1**
(45) Date of publication and mention of the grant of the patent: **07.10.2020**
(21) Application number: 16864296.5
(22) Date of filing: 10.11.2016
(51) Int. Cl.: G01L 3/10, B62D 5/04

(54) **YOKE COVER, TORQUE DETECTION DEVICE, ELECTRIC POWER STEERING DEVICE, YOKE COVER PRODUCTION METHOD, AND ELECTRIC POWER STEERING DEVICE PRODUCTION METHOD**
JOCHABDECKUNG, DREHMOMENTDETEKTOR, ELEKTRISCHE SERVOLENKVORRICHTUNG, HERSTELLUNGSVERFAHREN FÜR JOCHABDECKUNG UND HERSTELLUNGSVERFAHREN FÜR ELEKTRISCHE SERVOLENKUNG
COUVERCLE DE CULASSE AINSI QUE PROCÉDÉ DE FABRICATION DE CELUI-CI, DISPOSITIF DE DÉTECTION DE COUPLE, ET DISPOSITIF DE DIRECTION ASSISTÉE ÉLECTRIQUE AINSI QUE PROCÉDÉ DE FABRICATION DE CELUI-CI

(30) Priority: 11.11.2015 JP 2015221286
(43) Date of publication of application: 19.09.2018
(73) Proprietor: NSK LTD., Shinagawa-ku, Tokyo 141-8560 (JP); Nakanishi Metal Works Co., Ltd., Osaka-shi, Osaka 530-8566 (JP)
(72) Inventor: HATANAKA Kazuyuki, Fujisawa-shi Kanagawa 251-8501 (JP); SHIGETA Taishi, Maebashi-shi Gunma 371-8527 (JP); TAKI Masayuki, Osaka-shi Osaka 530-8566 (JP)
(74) Representative: Vossius & Partner Patentanwälte Rechtsanwälte mbB
(86) International application number: PCT/JP2016/083340
(87) International publication number: WO 2017/082335

(56) References cited:
- WO-A1-2014/147687
- JP-A- H1 078 358
- JP-A- 2005 156 485
- JP-A- 2014 122 869
- JP-A- 2014 122 869

## Description

### TECHNICAL FIELD

The present invention relates to a yoke cover that configures a torque detection device included in an automotive electric power steering device and is assembled to two electromagnetic yokes axially facing each other.

### BACKGROUND ART

An automotive electric power steering device is configured to detect steering torque generated by driver's manipulation of a steering wheel with use of a torque detection device (torque sensor) and apply steering assist torque by a motor to a steering system to reduce a driver's steering load (see Patent Literatures 1 to 3 or the like).

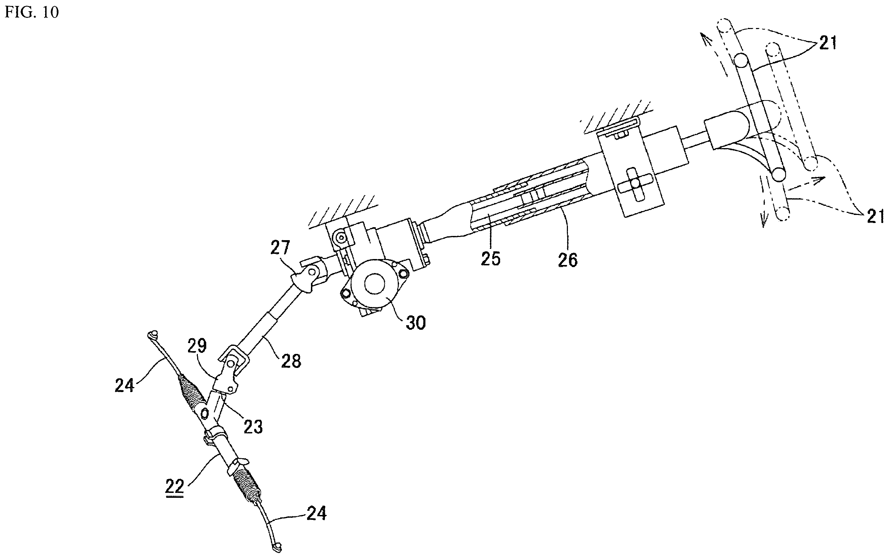

FIG. 10 is a partially sectioned side view exemplarily depicting an electric motor 30 functioning as an auxiliary motive power generation source and configured to reduce force necessary for manipulation of a steering wheel 21 (see Patent Literature 1 or the like).

In an automotive steering device exemplified in FIG. 10, rotation of the steering wheel 21 is transmitted to an input shaft 23 of a steering gear unit 22, so that the input shaft 23 rotates to allow a pair of left and right tie rods to be pushed and pulled. Accordingly, a steering angle is provided to a front wheel. The steering wheel 21 is supported at a rear end of a steering shaft 25 that is fixed to a vehicle body and is rotatably supported by a steering column 26. The steering shaft 25 has a front end supported at a rear end of an intermediate shaft 28 via a universal joint 27, and the intermediate shaft 28 has a front end connected to the input shaft 23 via a universal joint 29.

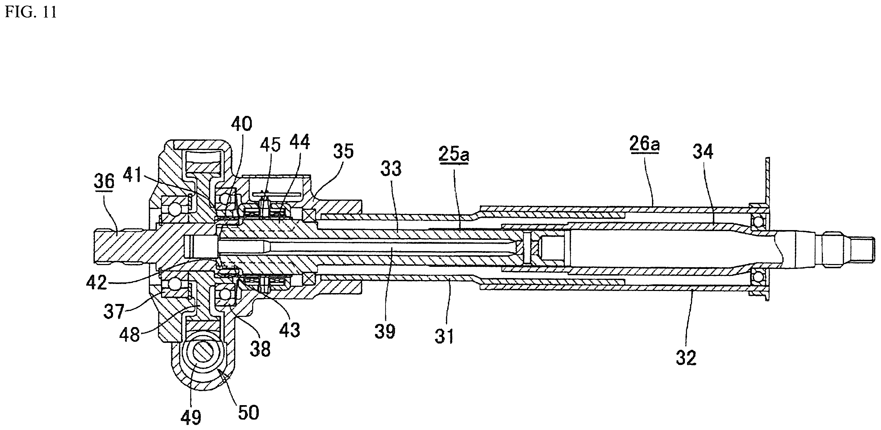

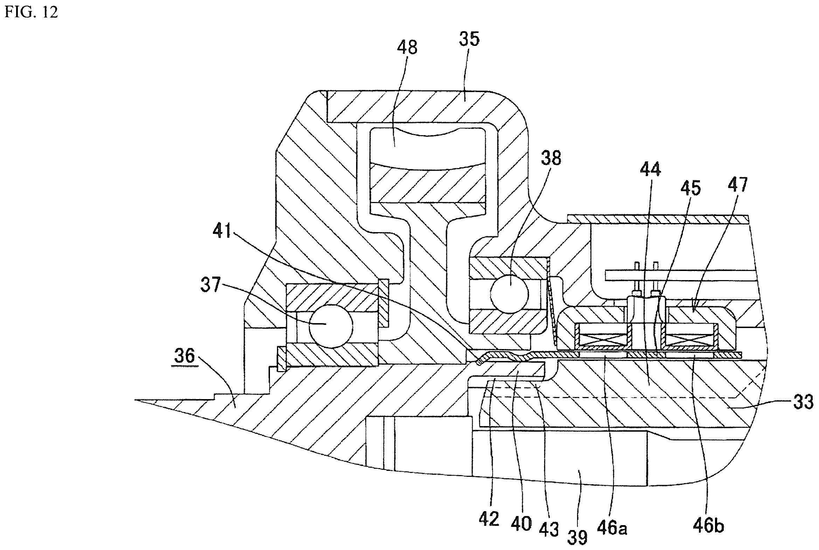

The electric power steering device will be described next in terms of an exemplary specific structure thereof with reference to a sectional view in FIG. 11 and an enlarged view in FIG. 12. A steering column 26a includes an inner column 31 and an outer column 32 assembled to have an entire length shortened upon secondary impact, and is supported at the vehicle body. The steering column 26a is provided therein with a rotatably supported steering shaft 25a that includes a lower shaft 33 and an upper shaft 34 assembled to transmit torque and have an entire length shortened upon secondary impact. The upper shaft 34 protruding from a rear end opening of the outer column 32 has a rear end fixing the steering wheel 21 (see FIG. 10). The inner column 31 has a front end joining and fixing a housing 35 into which a front half of the lower shaft 33 is inserted. In the housing 35, the lower shaft 33 functioning as an input shaft is provided thereahead with an output shaft 36 rotatably supported by a pair of ball bearings 37 and 38. The output shaft 36 and the lower shaft 33 are coupled via a torsion bar 39. The output shaft 36 has a front end protruding from a front end opening of the housing 35 and joining the universal joint 27 (see FIG. 10).

The output shaft 36 has a rear end provided with a tubular portion 40. The tubular portion 40 has an outer circumferential surface provided with a circumferential groove 41 extending along the entire circumference. The tubular portion 40 has an inner circumferential surface provided with a female stopper 42 having circumferential unevenness. The lower shaft 33 has an outer circumferential surface provided at a front end thereof with a male stopper 43 that has circumferential unevenness and has an outer diameter (a diameter of a circumscribed circle) smaller than that of a portion close to the front end. The male stopper 43 and the female stopper 42 engage each other at the uneven portions to be relatively rotatable within a predetermined angle range. This prevents excessive torsion of the torsion bar 39.

The lower shaft 33 is made of steel as a magnetic metal, and is provided, at the portion close to the front end of the outer circumferential surface, with a torque detection uneven portion 44 having circumferential unevenness. The torque detection uneven portion 44 is provided, around an outer circumference thereof, with a torque detection sleeve 45 that is made of a conductive nonmagnetic metal such as an aluminum alloy and has a cylindrical shape. The torque detection sleeve 45 has a proximal end fittedly outserted and fixed to the tubular portion 40. The proximal end of the torque detection sleeve 45 in this state has an edge caulked to the circumferential groove 41 for axial positioning and prevention of deformation of the torque detection sleeve 45. The torque detection sleeve 45 is has a portion positioned around an outer circumference of the torque detection uneven portion 44 and provided with a plurality of windows 46a and 46b. The torque detection uneven portion 44 and the torque detection sleeve 45 are provided, on the outer circumferences, with a torque detector 47 fittedly inserted and fixed to the housing 35.

The output shaft 36 has a portion close to the rear end provided with a worm wheel 48 fittedly outserted and fixed thereto, and the worm wheel 48 meshes with a worm 49 rotatably supported in the housing 35. The worm wheel 48 and the worm 49 configure a worm speed reducer 50.

The housing 35 supports and fixes the electric motor 30 (see FIG. 10) which has an output shaft joined to a proximal end of the worm 48 to enable transmission of torque.

In the electric power steering device configured as described above, when a driver manipulates the steering wheel 21 to apply torque as steering force to the steering shaft 25a, the torsion bar 39 has elastic torsion by a degree according to a direction and strength of the torque. This causes change in circumferential position relationship between the torque detection uneven portion 44 and the torque detection sleeve 45 and thus generates impedance variation of a coil configuring the torque detector 47. The direction and the strength of the torque can be detected in accordance with the impedance variation. The electric motor 30 generates assist power according to a detection result of the torque. This assist power is increased by the worm speed reducer 50 and is then applied to the output shaft 36. The driver then needs less force for manipulation of the steering wheel 21.

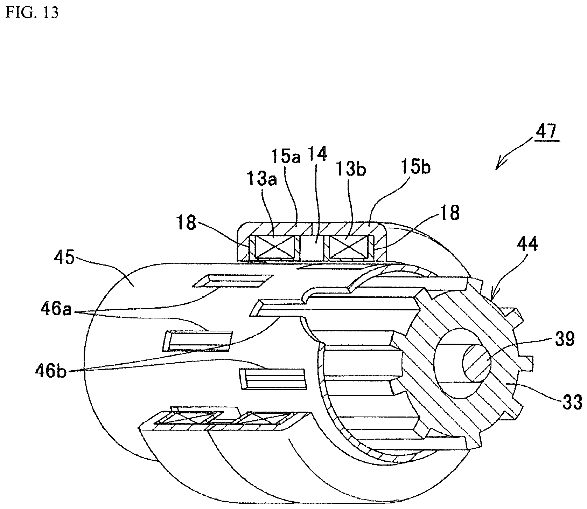

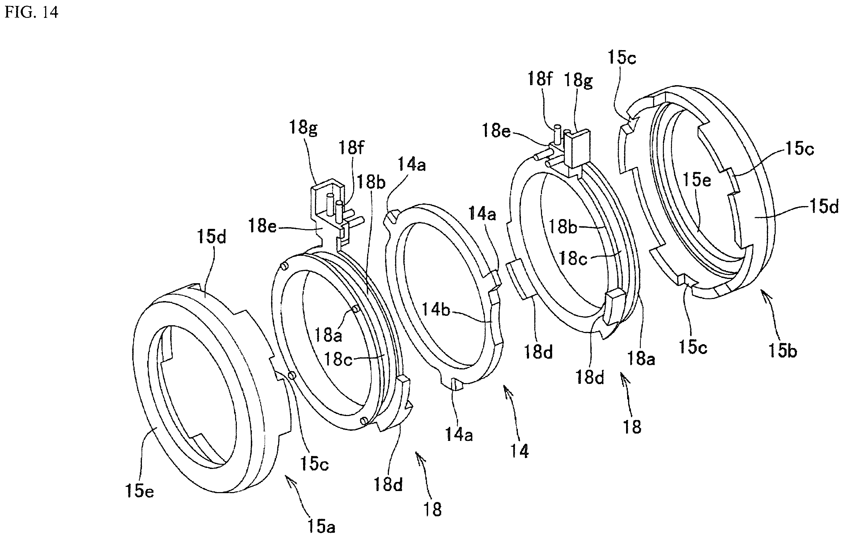

The torque detector 47 configuring the torque detection device according to Patent Literature 3 will be described next with reference to a partially sectional perspective view in FIG. 13 and an exploded perspective view in FIG. 14.

The torque detector 47 includes the torque detection uneven portion 44 provided at the lower shaft 33, a pair of detection coils 13a and 13b disposed inside the housing 35, and the torque detection sleeve 45 disposed between the torque detection uneven portion 44 and the detection coils 13a and 13b.

The torque detection sleeve 45 has an outer circumference surrounded with electromagnetic yokes 15a and 15b retaining coil bobbins 18 having the wound detection coils 13a and 13b having an identical specification. Specifically, the detection coils 13a and 13b are disposed coaxially with the torque detection sleeve 45. The detection coil 13a surrounds a first window row consisting of the windows 46a whereas the detection coil 13b surrounds a second window row consisting of the windows 46b.

The torque detector 47 includes the two identically shaped coil bobbins 18 that have the wound coils 13a and 13b and face each other.

The coil bobbins 18 each have a flange 18b that has a lateral end provided with a terminal attachment portion 18e configuring a coil connector to be connected with a substrate connector. There are provided regulating portions 18d axially symmetric about, as a symmetric axis, a perpendicular including the center of the coil bobbin 18 having an upper end provided with the terminal attachment portion 18e.

The regulating portions 18d each include a base protruding radially outward from part of the flange 18b, and a protrusion provided in one of circumferentially halved regions of the base and extending axially outward from the coil bobbin 18. In a state where the two coil bobbins 18 are disposed coaxially with the flanges 18b facing each other, the regulating portions 18d of the coil bobbins 18 circumferentially butt each other to be relatively positionally determined in a rotation angle direction.

The terminal attachment portion 18e has a substantially rectangular parallelepiped shape protruding radially outward from a laterally upper end of the flange 18b, and has an upper surface provided with two terminals 18f that are press fitted and fixed thereto and are to be connected to the substrate connector. These two coil terminals 18f are in parallel with each other and are fixed to protrude radially outward from the upper surface of the terminal attachment portion 18e.

The terminal attachment portion 18e is further provided, at one of lateral portions, with a tabular guide 18g protruding radially outward from the upper surface of the terminal attachment portion 18e.

The electromagnetic yokes 15a and 15b are shaped identically and each include a cylindrical portion 15d outserted to the coil bobbin 18 and a ring-shaped bottom 15e provided at an axially outer end when fixed to the coil bobbin 18. The bottom 15e is equal in inner diameter to a cylindrical portion (a groove 18c) of the coil bobbin 18.

The electromagnetic yokes 15a and 15b each have three dent portions 15c provided at an end opposite to the bottom 15e of the cylindrical portion 15d and circumferentially distant from one another at a predetermined angle.

There is provided a single yoke cover 14 that has a substantially ring shape and is provided, on an outer circumferential surface, with three protrusions 14a circumferentially distant from one another at a predetermined angle.

In a state where the protrusions 14a are fitted to the dent portions 15c of the electromagnetic yokes 15a and 15b, the yoke cover 14 is press fitted to inner circumferences of the cylindrical portions 15d of the two facing electromagnetic yokes 15a and 15b.

When the yoke cover 14 is press fitted to the electromagnetic yokes 15a and 15b, the protrusions 14a engage with the dent portions 15c and 15c to butt the dent portions. The yoke cover 14 is thus regulated in relative position in a press-fitting direction to the electromagnetic yokes 15a and 15b (regulated in press-fitting depth).

In comparison to the torque detection device according to Patent Literature 2, the torque detection device according to Patent Literature 3 achieves reduction in the number of constituent elements and reduction in the number of times of press fitting the yoke cover 14 configured as described above to the electromagnetic yokes 15a and 15b. Patent Literature 4 relates to a torque detection apparatus configured to detect torque generated at a rotation shaft, an electric power steering apparatus, and a vehicle, each including the torque detection apparatus.

### CITATIONS LIST

### PATENT LITERATURES

Patent Literature 1: International Publication No. 2014/199959 Publication
Patent Literature 2: International Publication No. 2004/018987 Pamphlet
Patent Literature 3: Japanese Unexamined Patent Application Publication No. 2014-122869
Patent Literature 4: WO 2014/147687 A1 which discloses a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the yoke cover comprising a plurality of circumferentially aligned protrusions extending radially outward from the inner circumferences of the electromagnetic yokes, engaging with a plurality of circumferentially aligned dent portions provided at ends facing each other of the two electromagnetic yokes to butt the dent portions, and each having a dented surface in at least one of an axial end surface or a radially distal end surface.

### SUMMARY OF INVENTION

### TECHNICAL PROBLEMS

The protrusions 14a provided at the single yoke cover 14 in the torque detection device according to Patent Literature 3 need to be regulated (accurate) in axial length to function to regulate a gap between the pair of detection coils 13a and 13b.

In a case where the yoke cover 14 is punched by fine blanking, highly accurate smooth shear surfaces enabling press fitting to the both electromagnetic yokes 15a and 15b are formed entirely on an outer circumferential surface in a thickness direction, and highly accurate smooth shear surfaces are formed entirely on radially distal end surfaces of the protrusions 14a in the thickness direction.

The radially distal end surfaces of the protrusions 14a thus have no shear droop, so that the protrusions 14a are regulated in axial length.

However, production of the yoke cover by fine blanking requires a highly accurate and highly rigid pressing metal die, press driving force directly necessary for processing, as well as force of pressing a material to be blanked and back-up force (die cushion). This leads to a complicated structure of a pressing machine and long cycle time.

The yoke cover thus has increase in production cost and deterioration in productivity.

In another case where the yoke cover is punched by ordinary press punching, increase in production cost and deterioration in productivity are inhibited without special processing like the fine blanking.

However, the yoke cover produced by such ordinary press punching has processed surfaces having highly accurate smooth shear surfaces as well as fracture surfaces and shear droops. It is thus difficult to obtain highly accurate smooth shear surfaces enabling press fitting to the both electromagnetic yokes.

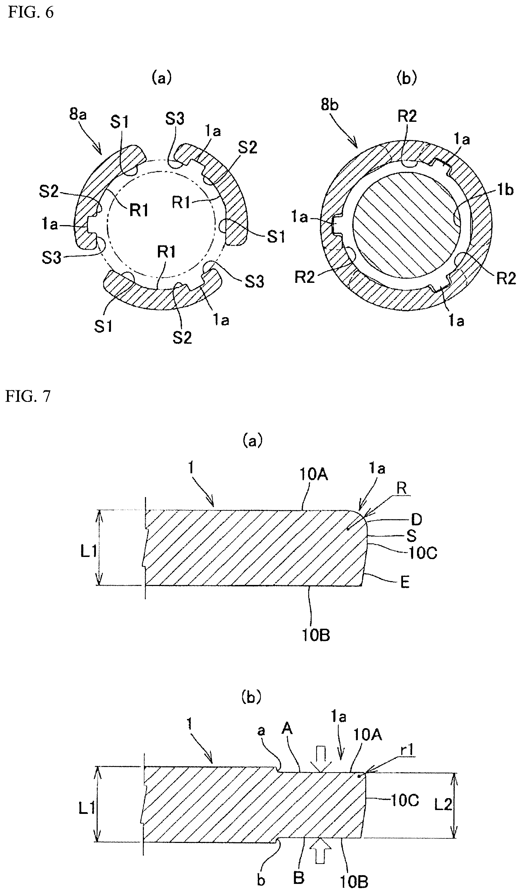

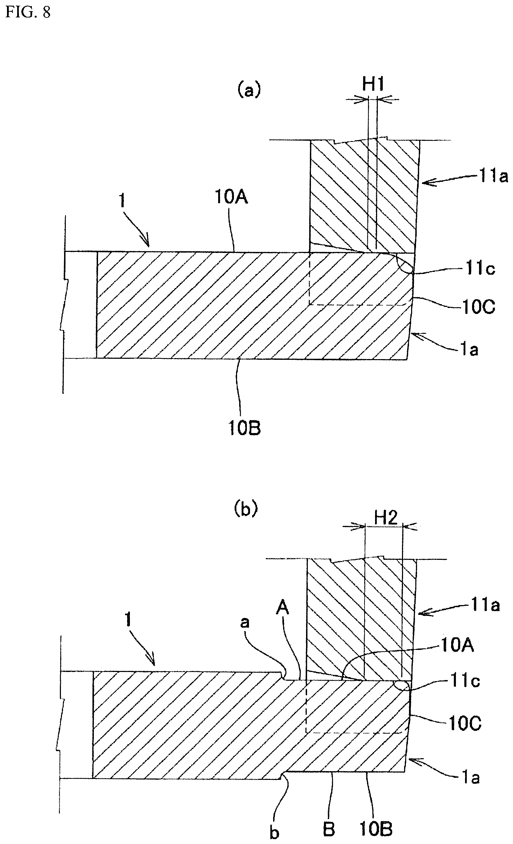

The protrusions of the yoke cover are also provided, on the radially distal end surfaces, with shear droops. In a state where a yoke cover 1 has a protrusion 1a provided with a shear droop D as depicted in an enlarged longitudinal sectional view of a main part in FIG. 7(a), the shear droop D has a large curvature radius R. When the yoke cover 1 is press fitted to an electromagnetic yoke 11a as depicted in an enlarged longitudinal sectional view of a main part in FIG. 8(a), the electromagnetic yoke 11a includes a dent portion 11c having an inner surface in radial contact with an axial end surface 10A of the protrusion 1a by a short radial contact length H1, failing to obtain a sufficient contact area.

The protrusions of the yoke cover cannot be regulated in axial length to satisfy required accuracy.

As described above, the yoke cover in the torque detection device according to Patent Literature 3 can achieve reduction in the number of constituent elements and the like, but can still be improved in regulation of the axial length of the protrusions without increase in production cost.

In view of this, it is an object of the present invention to regulate an axial length of a protrusion without increase in production cost for a single yoke cover press fitted to two electromagnetic yokes configuring a torque detection device.

### SOLUTIONS TO PROBLEMS

The present invention is defined in the claims. In order to solve the problems, the present invention provides a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the yoke cover including
a plurality of circumferentially aligned protrusions extending radially outward from the inner circumferences of the electromagnetic yokes, engaging with a plurality of circumferentially aligned dent portions provided at ends facing each other of the two electromagnetic yokes to butt the dent portions, and each having a dented surface in at least one of an axial end surface or a radially distal end surface.

The yoke cover thus configured includes the plurality of circumferentially aligned protrusions that engage with the plurality of circumferentially aligned dent portions of the electromagnetic yokes to butt the dent portions and have an axial length regulated by the dented surfaces. There is thus secured a sufficient contact area between an inner surface of each of the dent portions of the electromagnetic yokes and the axial end surface of each of the protrusions of the yoke cover.

Furthermore, the dented surface of each of the protrusions of the yoke cover has a small area. Increase in production cost for the yoke cover is inhibited by forming the dented surfaces in accordance with an appropriately selected processing method.

The axial length of the protrusions of the yoke cover can thus be regulated to satisfy required accuracy without increase in production cost for the single yoke cover press fitted to the two electromagnetic yokes configuring the torque detection device.

Preferably, the dented surface is a pressed surface obtained by pressing.

In such a configuration, the dented surface is formed by punching without execution of special processing such as fine blanking. This more effectively inhibits increase in production cost for the yoke cover.

The present invention provides a torque detection device including paired detection coils having impedance varied by torque generated at a rotary shaft and configured to detect the torque in accordance with output voltage of the detection coils, the torque detection device further including the yoke cover.

The present invention provides an electric power steering device configured to apply steering assist torque to an automotive steering system, the electric power steering device including the torque detection device configured to detect steering torque received by a steering mechanism, and a motor controller configured to drive control an electric motor for application of the steering assist torque according to the steering torque detected by the torque detection device.

In order to solve the problems, the present invention provides a method of producing a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the method including
pressing at least one of an axial end surface or a radially distal end surface of each of a plurality of circumferentially aligned protrusions that extends radially outward from the inner circumferences of the electromagnetic yokes, engages with a plurality of circumferentially aligned dent portions provided at ends facing each other of the two electromagnetic yokes to butt the dent portions, to regulate an axial length of the protrusions.

In such a yoke cover production method, the plurality of circumferentially aligned protrusions engages with the plurality of circumferentially aligned dent portions of the electromagnetic yokes to butt the dent portions and have the axial length regulated by the pressing. There is thus secured a sufficient contact area between an inner surface of each of the dent portions of the electromagnetic yokes and the axial end surface of each of the protrusions of the yoke cover.

The production method including no special processing such as fine blanking achieves regulation of the axial length of the protrusions of the yoke cover to satisfy required accuracy without increase in production cost.

The present invention provides a method of producing an electric power steering device configured to apply steering assist torque to an automotive steering system, the method including fitting the yoke cover produced in accordance with the production method, to inner circumferences of cylindrical portions of two electromagnetic yokes axially facing each other and configuring a torque detection device included in the electric power steering device.

### ADVANTAGEOUS EFFECTS OF INVENTION

As described above, the yoke cover and the production method thereof according to the present invention achieve regulating the axial length of the plurality of circumferentially aligned protrusions engaging with the plurality of circumferentially aligned dent portions of the electromagnetic yokes to butt the dent portions, by the dented surfaces formed by pressing or the like, and securing the sufficient contact area between the inner surface of each of the dent portions of the electromagnetic yokes and the axial end surface of each of the protrusions of the yoke cover. The present invention thus exerts a significant effect of regulating the axial length of the protrusions of the yoke cover to satisfy required accuracy without increase in production cost.

### BRIEF DESCRIPTION OF DRAWINGS

FIG. 1 is a perspective view of a yoke cover according to an embodiment of the present invention.
FIG. 2(a) is a plan view of the yoke cover, and FIG. 2(b) is a sectional view taken along arrows X-X indicated in FIG. 2(a).
FIG. 3(a) is a plan view of an electromagnetic yoke, and FIG. 3(b) is a sectional view taken along arrows Y-Y indicated in FIG. 3(a).
FIG. 4 is an exploded perspective view of the yoke cover and two electromagnetic yokes.
FIG. 5 is a front view depicting a state where the yoke cover is press fitted to inner circumferences of cylindrical portions of the two electromagnetic yokes, excluding remaining components configuring a torque detection device.
FIGs. 6(a) and 6(b) are explanatory views depicting a yoke cover production method according to an example of the embodiment of the present invention; FIG. 6(a) depicts first punching and FIG. 6(b) depicts second punching.
FIGs. 7(a) and 7(b) are enlarged longitudinal sectional views of a main part; FIG. 7(a) depicts a protrusion formed on an outer circumferential surface of the yoke cover by press punching and FIG. 7(b) depicts the protrusion having an axial end surface processed by pressing.
FIGs. 8(a) and 8(b) are enlarged longitudinal sectional views of a main part depicting a state where the yoke cover is press fitted to the electromagnetic yoke; FIG. 8(a) exemplarily depicts the yoke cover including the protrusion not processed by pressing and FIG. 8(b) exemplarily depicts the yoke cover including the protrusion having the axial end surface processed by pressing.
FIGs. 9(a) and 9(b) are enlarged longitudinal sectional views of a main part; FIG. 9(a) depicts the protrusion having a radially distal end surface processed by pressing and FIG. 9(b) depicts the protrusion having the axial end surface and the radially distal end surface processed by pressing.
FIG. 10 is a partially sectioned side view of a steering device.
FIG. 11 is a sectional view of an electric power steering device.
FIG. 12 is an enlarged view of an upper half portion adjacent to a left end in FIG. 10.
FIG. 13 is a partially sectional perspective view of a torque detection device.
FIG. 14 is an exploded perspective view of the torque detection device, excluding detection coils.

### DESCRIPTION OF EMBODIMENTS

An embodiment of the present invention will now be described in detail with reference to the accompanying drawings. The present invention is not limited to the mode according to the accompanying drawings but includes all embodiments satisfying requirements recited in the patent claims.

The present invention provides a yoke cover functioning equally to the yoke cover (the yoke cover 14 depicted in FIGs. 13 and 14) configuring the torque detection device disclosed in Patent Literature 3, and is to be interposed between two electromagnetic yokes axially facing each other and be fitted to inner circumferences of cylindrical portions of the two electromagnetic yokes.

The present invention also provides a torque detection device functioning equally to the torque detection device (the torque detection device including the torque detector 47 depicted in FIG. 13) disclosed in Patent Literature 3, includes paired detection coils having impedances varied inversely or codirectionally by torque generated at a rotary shaft, and is configured to detect the torque in accordance with output voltage of the detection coils.

The present invention further provides an electric power steering device functioning equally to the electric power steering device disclosed in Patent Literature 1, and includes the torque detection device configured to detect steering torque received by a steering mechanism, and a motor controller configured to drive control an electric motor for application of the steering assist torque in accordance with the steering torque detected by the torque detection device.

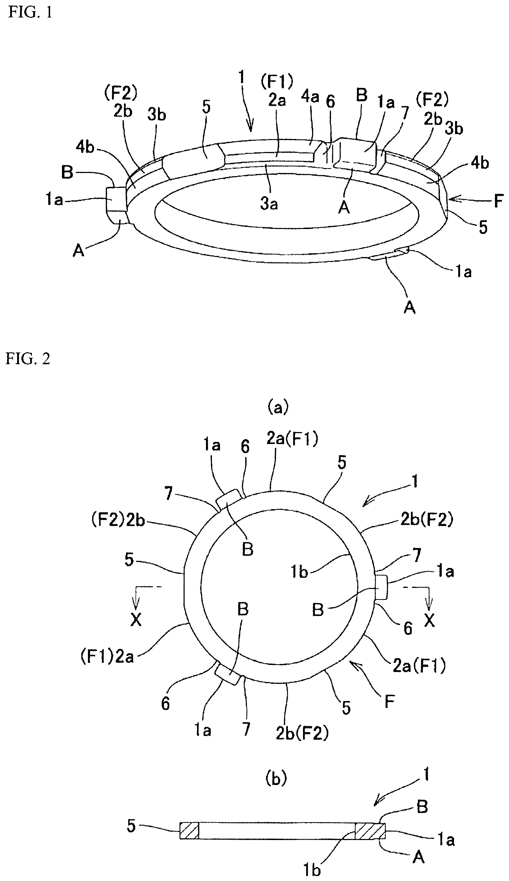

As depicted in a perspective view in FIG. 1, a plan view in FIG. 2(a), and a sectional view in FIG. 2(b), a yoke cover 1 according to the embodiment of the present invention has a substantially ring shape and an outer circumferential surface F that includes three first circumferential portions F1 each provided with a first cylindrical surface 2a and three second circumferential portions F2 circumferentially displaced from the first circumferential portions F1 and each provided with a second cylindrical surface 2b. The first cylindrical surfaces 2a and the second cylindrical surfaces 2b are disposed alternately in the circumferential direction.

The outer circumferential surface F includes at least two first circumferential portions F1 each provided with the first cylindrical surface 2a, at least two the second circumferential portions F2 each provided with the second cylindrical surface 2b, and at least two protrusions 1a.

The yoke cover 1 according to the present embodiment includes three protrusions 1a equally distant in the circumferential direction, and adjacent two protrusions 1a and 1a interpose a single first cylindrical surface 2a and a single second cylindrical surface 2b.

The first cylindrical surface 2a and the second cylindrical surface 2b adjacent to each other and disposed between the protrusions 1a and 1a interpose a planar portion 5.

The protrusion 1a and the first cylindrical surface 2a adjacent thereto interpose a planar portion 6 whereas the protrusion 1 a and the second cylindrical surface 2b adjacent thereto interpose a planar portion 7.

The planar portions 5 to 7 are not necessarily planar but can be curved, and have only to be positioned radially inside a virtual cylindrical surface including the first cylindrical surface 2a and the second cylindrical surface 2b.

The protrusions 1a, the first cylindrical surfaces 2a, and the second cylindrical surfaces 2b on the outer circumferential surface F of the yoke cover 1 are formed by press punching or the like. The first cylindrical surfaces 2a and the second cylindrical surfaces 2b are shear surfaces formed by press punching in punching directions different from each other. The first cylindrical surfaces 2a are displaced in a first axial direction (downward in FIG. 1) whereas the second cylindrical surfaces 2b are displaced in a second axial direction (upward in FIG. 1).

The first cylindrical surfaces 2a are the shear surfaces formed by press punching. Each of the first cylindrical surfaces 2a is provided, close to a first axial end (lower end in FIG. 1) of the first cylindrical surface 2a, with a shear droop 3a having an R shape, and is provided, close to a second axial end (upper end in FIG. 1) of the first cylindrical surface 2a, with a fracture surface 4a.

Similarly, the second cylindrical surfaces 2b are the shear surfaces formed by press punching in a punching direction different from that of the press punching for formation of the first cylindrical surfaces 2a. Each of the second cylindrical surfaces 2b is provided, close to a first axial end (lower end in FIG. 1) of the second cylindrical surface 2b, with a fracture surface 4b, and is provided, close to a second axial end (upper end in FIG. 1) of the second cylindrical surface 2b, with a shear droop 3b having an R shape.

The fracture surface 4a is a tapered surface gradually reduced in outer diameter as extending upward from an upper edge of the first cylindrical surface 2a (as axially distant from the upper edge of the first cylindrical surface 2a), whereas the fracture surface 4b is a tapered surface gradually reduced in outer diameter as extending downward from a lower edge of the second cylindrical surface 2b (as axially distant from the lower edge of the second cylindrical surface 2b).

The protrusions 1a each have axial end surfaces, namely, a lower surface in FIGs. 1 and 2(b) provided with a pressed surface A, and an upper surface in FIGs. 1 and 2(b) provided with a pressed surface B, which are formed by pressing.

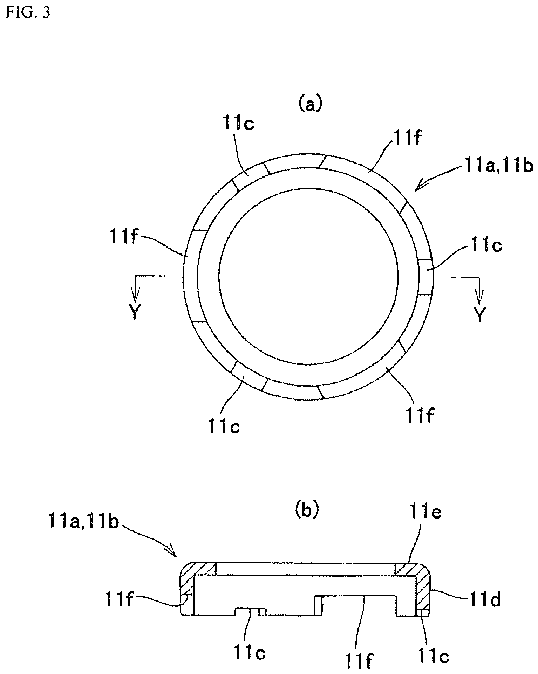

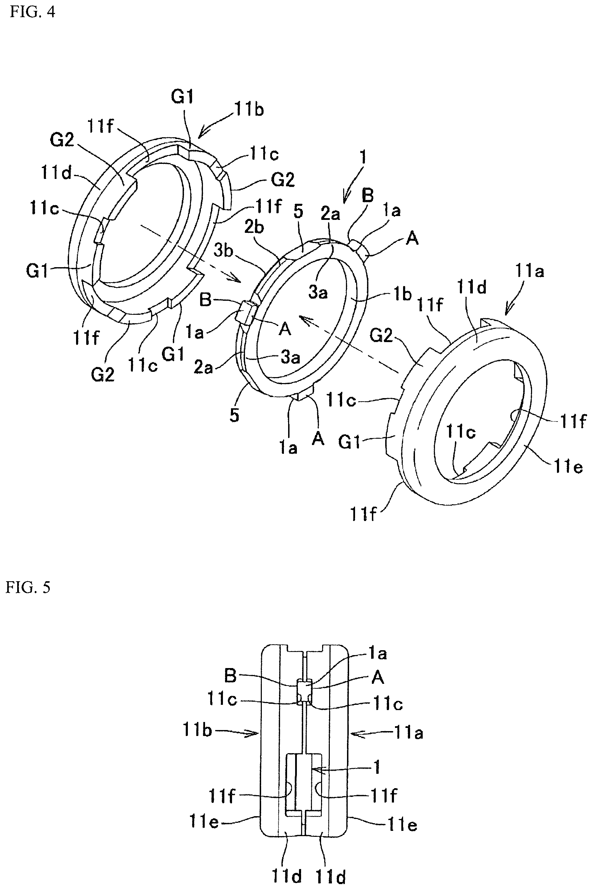

As depicted in a plan view in FIG. 3(a), a sectional view in FIG. 3(b), and an exploded perspective view in FIG. 4, the yoke cover 1 is press fitted to two electromagnetic yokes 11a and 11b that are shaped identically and each includes a cylindrical portion 11d outserted to a coil bobbin (not depicted) and a ring-shaped bottom 11e provided at an axially outer end when fixed to the coil bobbin.

The electromagnetic yokes 11a and 11b are each provided with three dent portions 11c equally distant in the circumferential direction and disposed at an end opposite to the bottom 11e of the cylindrical portion 11d (the end close to the yoke cover 1), and cut-away portions 11f each disposed between the dent portions 11c and 11c adjacent to each other. The dent portions 11 c and the cut-away portions 11f are disposed alternately in the circumferential direction. FIG. 4 depicts the cut-away portions 11f circumferentially longer than the dent portions 11c, but the present invention is not limited to this case.

The cut-away portion 11f engages with a terminal attachment portion (see the terminal attachment portion 18e in FIG. 14) of the coil bobbin (see the coil bobbin 18 in FIG. 14).

As depicted in the exploded perspective view in FIG. 4 excluding remaining components configuring the torque detection device and a front view in FIG. 5, when the yoke cover 1 is press fitted to the inner circumferences of the cylindrical portions 11 d of the two electromagnetic yokes 11a and 11b, the three first cylindrical surfaces 2a are press fitted to the electromagnetic yoke 11a and the three second cylindrical surfaces 2b are press fitted to the electromagnetic yoke 11b.

The first cylindrical surfaces 2a of the yoke cover 1 are fitted to inner surfaces of engagement protruding pieces G1 of the electromagnetic yoke 11a whereas the second cylindrical surfaces 2b of the yoke cover 1 are fitted to inner surfaces of engagement protruding pieces G2 of the electromagnetic yoke 11b. The protrusions 1a of the yoke cover 1 engage with the dent portions 11c and 11c of the electromagnetic yokes 11a and 11b.

When the yoke cover 1 is press fitted to the electromagnetic yokes 11a and 11b as depicted in FIG. 4, the R-shaped shear droops 3a and 3b (see also FIG. 1) provided at the yoke cover 1 achieve improvement in press fitting property.

When the yoke cover 1 is assembled to the two electromagnetic yokes 11a and 11b, the yoke cover 1 including the first cylindrical surfaces 2a and the second cylindrical surfaces 2b as highly accurate smooth shear surfaces generates stable and firm retentive force in a state where the yoke cover 1 is press fitted to the inner circumferences of the cylindrical portions 11d and 11d of the electromagnetic yokes 11 a and 11b.

The yoke cover 1 press fitted to the electromagnetic yokes 11a and 11b by a depth that is regulated by the protrusions 1a of the yoke cover 1 and the dent portions 11c and 11c of the electromagnetic yokes 11a and 11b and is less than a half of the thickness of the yoke cover 1, as depicted in FIG. 5. Specifically, the protrusions 1a engage with the dent portions 11c and 11c butting the pressed surfaces A and B. The yoke cover 1 is thus regulated in relative position in a press-fitting direction to the electromagnetic yokes 11a and 11b (regulated in press-fitting depth).

The yoke cover 1 and the electromagnetic yokes 11a and 11b have only to be fitted together to prevent relative shift of the electromagnetic yokes 11a and 11b assembled with the yoke cover 1. The yoke cover 1 can thus alternatively be transition fitted instead of being press fitted (interference fitted).

A method of producing the yoke cover 1 will be described next.

The method of producing the yoke cover 1 (see FIGs. 1, 2(a), and 2(b) according to the present embodiment) includes first punching and second punching each executed by press punching, and pressing the protrusions 1a.

The first punching includes press punching a plate to form the first cylindrical surfaces 2a to be press fitted to the first electromagnetic yoke 11a out of the two electromagnetic yokes 11a and 11b as shear surfaces in the plurality of first circumferential portions F1 in the outer circumferential surface F.

The second punching includes press punching, in a punching direction different from that of the first punching, the plate processed through the first punching, to form the second cylindrical surfaces 2b to be press fitted to the second electromagnetic yoke 11b out of the two electromagnetic yokes 11a and 11b as shear surfaces in the plurality of second circumferential portions F2 circumferentially displaced from the first circumferential portions F1 in the outer circumferential surface F.

The pressing includes pressing the plate processed through the first punching and the second punching, at predetermined portions of the protrusions 1a to regulate an axial length of the protrusions 1a.

Described next is the method of producing the yoke cover 1 according to an example of the embodiment of the present invention.

### (First punching)

As depicted in an explanatory view in FIG. 6(a), the plate is press punched with use of a first punching die 8a hatched in the figure (e.g. punched from a rear surface to a front surface in FIG. 6(a)).

The first punching die 8a has dent portions for formation of the protrusions 1a, arc portions R1, and linear portions S1 to S3.

The plate is thus provided with the protrusions 1a, the first cylindrical surfaces 2a as shear surfaces, the shear droops 3a, the fracture surfaces 4a, and the planar portions 5 to 7 (see FIGs. 1, 2(a), and 2(b)).

### (Second punching)

As depicted in an explanatory view in FIG. 6(b), the plate is press punched with use of a second punching die 8b hatched in the figure (e.g. punched from the front surface to the rear surface in FIG. 6(b)).

The second punching die 8b has arc portions R2.

The plate is thus provided with the second cylindrical surfaces 2b as shear surfaces, the shear droops 3b, and the fracture surfaces 4b (see FIGs. 1, 2(a), and 2(b)).

The second punching die 8b simultaneously punches the outer circumference and an inner circumference 1b of the yoke cover 1 to achieve accuracy of outer and inner diameters (coaxiality).

The above description exemplifies forming the protrusions 1a through the first punching. The protrusions 1a can alternatively be formed through the second punching.

As depicted in an enlarged longitudinal sectional view of a main part in FIG. 7(a), the protrusions 1a formed through the first punching or the second punching each have a highly accurate smooth shear surface S, as well as a fracture surface E and a shear droop D, which are formed by press punching. The shear droop D has a large curvature radius R with difficulty in securing a planar surface. Each of the protrusions 1a having the shear droop D is thus hard to secure a contact surface with an inner surface of each of the dent portions 11c of the electromagnetic yokes.

The protrusions 1a are thus regulated in axial length (to achieve accuracy in axial length) through the following pressing.

### (Pressing)

As depicted in an enlarged longitudinal sectional view of a main part in FIG. 7(b), axial end surfaces 10A and 10B of the protrusion 1a is pressed to form the accurately finished pressed surfaces A and B in the axial end surfaces 10A and 10B.

The protrusion 1a includes a distal end portion having an axial length L2 smaller than an axial length L1 of an inner circumferential portion of the yoke cover 1 (L2 < L1).

The axial end surfaces 10A and 10B in the distal end portion of the protrusion 1a are provided with steps a and b, respectively, to be dented. The pressed surfaces A and B are thus regarded as dented surfaces.

Such pressing causes the portion formerly provided with the shear droop D depicted in FIG. 7(a) to have a curvature radius r1 significantly smaller than the curvature radius R of the shear droop D (r1 << R).

When the yoke cover is press fitted to the electromagnetic yoke 11a as depicted in an enlarged longitudinal sectional view of a main part in FIG. 8(b), the inner surface of the dent portion 11 c of the electromagnetic yoke 11 a and the axial end surface 10A of the protrusion 1a have a long radial contact length H2 to secure a sufficient contact area.

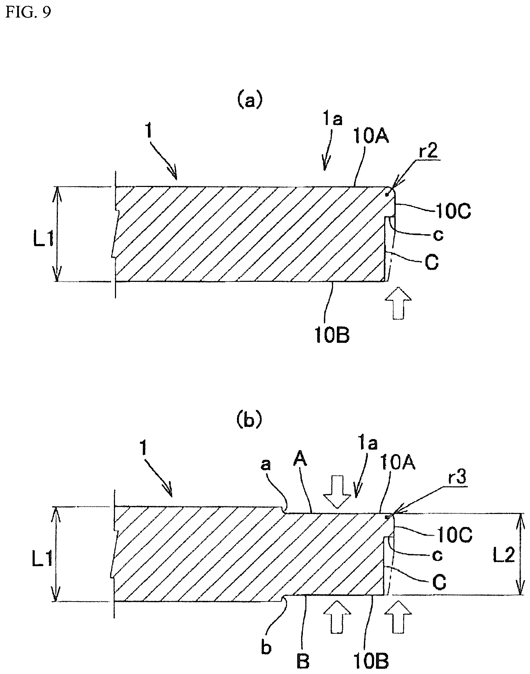

As depicted in an enlarged longitudinal sectional view of a main part in FIG. 9(a), such pressing is alternatively applied to a portion having the fracture surface E depicted in FIG. 7(a) in a radially distal end surface 10C of the protrusion 1a to form a pressed surface C.

The shear droop of the protrusion 1a is thus filled with a material.

The radially distal end surface 10C is provided with a step c to be dented. The pressed surface C is thus regarded as a dented surface.

Such pressing causes the portion formerly provided with the shear droop D depicted in FIG. 7(a) to have a curvature radius r2 significantly smaller than the curvature radius R of the shear droop D (r2 << R).

As depicted in an enlarged longitudinal sectional view of a main part in FIG. 9(b), formation of the pressed surfaces A and B by pressing the axial end surfaces 10A and 10B of the protrusion 1a and formation of the pressed surface C by pressing the radially distal end surface 10C of the protrusion 1a can alternatively be executed simultaneously.

Such pressing causes the portion formerly provided with the shear droop D depicted in FIG. 7(a) to have a curvature radius r3 significantly smaller than the curvature radius R of the shear droop D (r3 << R).

The yoke cover 1 is produced by press punching in each of the first punching and the second punching, and processing by pressing in the pressing.

According to the method of producing the yoke cover 1 as described above, the press punching including the first punching and the second punching in the different punching directions provides, as shear surfaces, the first cylindrical surfaces 2a to be fitted to the first electromagnetic yoke 11a and the second cylindrical surfaces 2b to be fitted to the second electromagnetic yoke 11b. There is thus no need for shaving or the like after the press punching. Furthermore, special processing such as fine blanking is not executed, which has long cycle time and deteriorates productivity.

The shear droops are provided by the press punching at the portions closer to the first electromagnetic yoke 11a than the first cylindrical surfaces 2a and the portions closer to the second electromagnetic yoke 11b than the second cylindrical surfaces 2b. The corner radius portions enabling highly efficient fitting are thus automatically formed by the press punching for formation of the first cylindrical surfaces 2a and the second cylindrical surfaces 2b, with no additional processing for formation of the corner radius portions.

This achieves reduction in production cost for the yoke cover 1.

Furthermore, each of the first cylindrical surfaces 2a displaced from the axial center toward the first electromagnetic yoke 11a and the adjacent one of the second cylindrical surfaces 2b displaced from the axial center toward the second electromagnetic yoke 11b, as shear surfaces formed by press punching in the different punching directions, are provided therebetween with the planar portion 5 to cause the first cylindrical surface 2a and the second cylindrical surface 2b to be distant from each other. The transition portion between the first cylindrical surface 2a and the second cylindrical surface 2b adjacent to each other will thus not affect fitting to the electromagnetic yokes 11a and 11b.

Furthermore, the yoke cover has no axial directivity with no need for consideration of the direction (the front or the rear) upon fitting.

The yoke cover 1 obtained in accordance with any one of the examples of the production method achieves improvement in workability in fitting the yoke cover 1 to the two electromagnetic yokes 11a and 11b facing each other.

The plurality of circumferentially aligned protrusions 1a is formed through the first punching or the second punching. After the second punching, the axial end surfaces 10A and 10B of each of the protrusions 1a and/or the radially distal end surface 10C of each of the protrusions 1a are pressed, to regulate the axial length of the protrusions 1a with a sufficient contact area secured between the inner surface of each of the dent portions 11c of the electromagnetic yokes and each of the axial end surfaces of the protrusions 1a of the yoke cover 1.

The production method including no special processing such as fine blanking achieves regulation of the axial length of the protrusions 1a of the yoke cover 1 to satisfy required accuracy without increase in production cost.

The above description refers to production of the yoke cover 1 shaped as depicted in FIGs. 1, 2(a) and 2(b) by press punching and pressing. The press punching can be replaced with machining, forging, casting, or the like, whereas the pressing can be replaced with machining or the like.

### REFERENCE SIGNS LIST

- 1: yoke cover
- 1 a: protrusion
- 1b: inner circumference
- 2a: first cylindrical surface (shear surface by first punching)
- 2b: second cylindrical surface (shear surface by second punching)
- 3a, 3b: corner R part (shear droop)
- 4a, 4b: tapered surface (fracture surface)
- 5, 6, 7: planar portion
- 8a, 9a: first punching die
- 8b, 9b: second punching die
- 10A, 10B: axial end surface
- 10C: radially distal end surface
- 11a, 11b: electromagnetic yoke
- 11c: dent portion
- 11d: cylindrical portion
- 11e: bottom
- 11f: cut-away portion
- 13a, 13b: detection coil
- 14: yoke cover
- 14a: protrusion
- 15a, 15b: electromagnetic yoke
- 15c: dent portion
- 15d: cylindrical portion
- 15e: bottom
- 18: coil bobbin
- 18a, 18b: flange
- 18c: groove
- 18d: regulating portion
- 18e: terminal attachment portion
- 18f: terminal
- 18g: guide
- 21: steering wheel
- 22: steering gear unit
- 23: input shaft
- 24: tie rod
- 25, 25a: steering shaft
- 26, 26a: steering column
- 27: universal joint
- 28: intermediate shaft
- 29: universal joint
- 30: electric motor
- 31: inner column
- 32: outer column
- 33: lower shaft
- 34: upper shaft
- 35: housing
- 36: output shaft
- 37, 38: ball bearing
- 39: torsion bar
- 40: tubular portion
- 41: circumferential groove
- 42: female stopper
- 43: male stopper
- 44: torque detection uneven portion
- 45: torque detection sleeve
- 46a, 46b: window
- 47: torque detector
- 48: worm wheel
- 49: worm
- 50: worm speed reducer
- A, B, C: pressed surface by pressing (dented surface)
- a, b, c: step
- D: shear droop
- E: fracture surface
- F: outer circumferential surface
- F1: first circumferential portion
- F2: second circumferential portion
- G1, G2: engagement protruding piece
- H1, H2: radial contact length
- L1, L2: axial length
- R: curvature radius of shear droop
- r1, r2, r3: curvature radius after pressing
- R1, R2: arc portion
- S1, S2, S3: linear portion
- S: shear surface

## Claims

1. A yoke cover (1) for use in a torque detection device including paired detection coils (13a, 13b) having impedance varied by torque generated at a rotary shaft and configured to detect the torque in accordance with output voltage of the detection coils (13a, 13b), the single yoke cover (1) interposed between two electromagnetic yokes (11a, 11b) axially facing each other and fitted to inner circumferences of cylindrical portions (11d) of the two electromagnetic yokes (11a, 11b) to retain the two electromagnetic yokes (11a, 11b), the yoke cover (1) comprising
a plurality of circumferentially aligned protrusions (1a) extending radially outward from the inner circumferences of the electromagnetic yokes (11a, 11b), engaging with a plurality of circumferentially aligned dent portions (11c) provided at ends facing each other of the two electromagnetic yokes (11a, 11b) to butt the dent portions (11c), and each having a dented surface (A, B) in an axial end surface (10A, 10B), and
an axial length (L2) of the protrusion (1a) is shorter than an axial length (L1) of an inner circumferential portion of the yoke cover (1).

2. The yoke cover (1) according to claim 1, wherein the dented surface (A, B) is a pressed surface obtained by pressing.

3. A torque detection device comprising paired detection coils (13a, 13b) having impedance varied by torque generated at a rotary shaft and configured to detect the torque in accordance with output voltage of the detection coils (13a, 13b),
the torque detection device further comprising the yoke cover (1) according to claim 1 or 2.

4. An electric power steering device configured to apply steering assist torque to an automotive steering system,
the electric power steering device comprising the torque detection device according to claim 3 configured to detect steering torque received by a steering mechanism, and a motor controller configured to drive control an electric motor (30) for application of the steering assist torque according to the steering torque detected by the torque detection device.

5. A method of producing a yoke cover (1) for use in a torque detection device including paired detection coils (13a, 13b) having impedance varied by torque generated at a rotary shaft and configured to detect the torque in accordance with output voltage of the detection coils (13a, 13b), the single yoke cover (1) interposed between two electromagnetic yokes (11a, 11b) axially facing each other and fitted to inner circumferences of cylindrical portions (11d) of the two electromagnetic yokes (11a, 11b) to retain the two electromagnetic yokes (11a, 11b), the method comprising
press punching a plate to form a shape including a plurality of circumferentially aligned protrusions (1a) that extends radially outward from the inner circumferences of the electromagnetic yokes (11a, 11b), engages with a plurality of circumferentially aligned dent portions (11c) provided at ends facing each other of the two electromagnetic yokes (11a, 11b) to butt the dent portions (11c), and
pressing at least one of an axial end surface (10A, 10B) of the protrusions (1a) and a radially distal end surface (10C) of each of the protrusions (1a) to regulate an axial length (L2) of the protrusions (1a),
wherein a shear droop (D) is formed in the protrusions (1a) formed through the press punching, and the pressing causes a portion formerly provided with the shear droop (D) to have a curvature radius (r1, r2, r3) smaller than a curvature radius (R) of the shear droop (D).

6. A method of producing an electric power steering device configured to apply steering assist torque to an automotive steering system,
the method comprising fitting the yoke cover (1) produced in accordance with the production method of claim 5, to inner circumferences of cylindrical portions of two electromagnetic yokes (11a, 11b) axially facing each other and configuring a torque detection device included in the electric power steering device.

## Patentansprüche

1. Jochabdeckung (1) zur Verwendung in einer Drehmomentdetektionsvorrichtung, die gepaarte Detektionsspulen (13a, 13b) aufweist, deren Impedanz durch ein an einer Drehwelle erzeugtes Drehmoment variiert, und die eingerichtet ist, das Drehmoment gemäß einer Ausgangsspannung der Detektionsspulen (13a, 13b) zu detektieren, wobei die einzelne Jochabdeckung (1) zwischen zwei elektromagnetischen Jochen (11a, 11b), die einander axial zugewandt sind, angeordnet und an Innenumfängen zylindrischer Abschnitte (11d) der zwei elektromagnetischen Joche (11a, 11b) montiert ist, um die zwei elektromagnetischen Joche (11a, 11b) zu halten, wobei die Jochabdeckung (1) aufweist:
eine Vielzahl von umlaufend ausgerichteten Vorsprüngen (1a), die sich von den Innenumfängen der elektromagnetischen Joche (11a, 11b) radial nach außen erstrecken, mit einer Vielzahl von umlaufend ausgerichteten Verzahnungsabschnitten (11c), die an einander zugewandten Enden der zwei elektromagnetischen Joche (11a, 11b) vorgesehen sind, in Eingriff stehen, um an den Verzahnungsabschnitten (11c) anzuliegen, und jeweils eine Verzahnungsfläche (A, B) in einer axialen Endfläche (10A, 10B) aufweisen, und
eine axiale Länge (L2) des Vorsprungs (1a) kürzer ist als eine axiale Länge (L1) eines Innenumfangsabschnitts der Jochabdeckung (1).

2. Jochabdeckung (1) nach Anspruch 1, wobei die Verzahnungsfläche (A, B) eine gepresste Oberfläche ist, die durch Pressen erhalten wird.

3. Drehmomentdetektionsvorrichtung, die gepaarte Detektionsspulen (13a, 13b) aufweist, deren Impedanz durch ein an einer Drehwelle erzeugtes Drehmoment variiert, und die eingerichtet ist, das Drehmoment gemäß einer Ausgangsspannung der Detektionsspulen (13a, 13b) zu detektieren,
wobei die Drehmomentdetektionsvorrichtung ferner die Jochabdeckung (1) nach Anspruch 1 oder 2 aufweist.

4. Elektrische Servolenkungsvorrichtung, die eingerichtet ist, ein Lenkunterstützungsmoment an ein Kraftfahrzeuglenkungssystem anzulegen,
wobei die elektrische Servolenkungsvorrichtung die Drehmomentdetektionsvorrichtung nach Anspruch 3, die eingerichtet ist, ein von einem Lenkmechanismus aufgenommenes Lenkmoment zu detektieren, und ein Motorsteuergerät aufweist, das eingerichtet ist, eine Antriebssteuerung an einem Elektromotor (30) vorzunehmen, um gemäß des von der Drehmomentdetektionsvorrichtung detektierten Drehmoments das Lenkunterstützungsmoment anzulegen.

5. Verfahren zur Herstellung einer Jochabdeckung (1) zur Verwendung in einer Drehmomentdetektionsvorrichtung, die gepaarte Detektionsspulen (13a, 13b) aufweist, deren Impedanz durch ein an einer Drehwelle erzeugtes Drehmoment variiert, und die eingerichtet ist, das Drehmoment gemäß einer Ausgangsspannung der Detektionsspulen (13a, 13b) zu detektieren, wobei die einzelne Jochabdeckung (1) zwischen zwei elektromagnetischen Jochen (11a, 11b), die einander axial zugewandt sind, angeordnet ist und an Innenumfängen zylindrischer Abschnitte (11d) der zwei elektromagnetischen Joche (11a, 11b) montiert ist, um die zwei elektromagnetischen Joche (11a, 11b) zu halten, wobei das Verfahren umfasst:
Pressstanzen einer Platte, um eine Form zu bilden, die eine Vielzahl umlaufend ausgerichteter Vorsprünge (1a) aufweist, die sich von den Innenumfängen der elektromagnetischen Joche (11a, 11b) radial nach außen erstrecken, mit einer Vielzahl von umlaufend ausgerichteten Verzahnungsabschnitten (11c), die an einander zugewandten Enden der zwei elektromagnetischen Joche (11a, 11b) vorgesehen sind, in Eingriff steht, um an den Verzahnungsabschnitten (11c) anzuliegen, und
Pressen einer axialen Endfläche (10A, 10B) der Vorsprünge (1a) und/oder einer radial distalen Endfläche (10C) von jedem der Vorsprünge (10a), um eine axiale Länge (L2) der Vorsprünge (1a) zu regulieren,
wobei ein Scherüberhang (D) in den durch das Pressstanzen gebildeten Vorsprüngen (1a) gebildet wird, und das Pressen bewirkt, dass ein Abschnitt, der zuvor mit dem Scherüberhang (D) versehen war, einen Krümmungsradius (r1, r2, r3) besitzt, der kleiner als ein Krümmungsradius (R) des Scherüberhangs (D) ist.

6. Verfahren zur Herstellung einer elektrischen Servolenkungsvorrichtung, die eingerichtet ist, ein Lenkunterstützungsmoment an ein Kraftfahrzeuglenkungssystem anzulegen,
wobei das Verfahren das Montieren der gemäß dem Herstellungsverfahren nach Anspruch 5 hergestellten Jochabdeckung (1) an Innenumfängen zylindrischer Abschnitte von zwei elektromagnetischen Jochen (11a, 11b), die einander axial zugewandt sind und Bilden einer in der elektrischen Servolenkungsvorrichtung enthaltenen Drehmomentdetektionsvorrichtung, umfasst.

## Revendications

1. Couvercle (1) de culasse pour l'utilisation dans un dispositif de détection de couple comportant des bobines de détection appariées (13a, 13b) présentant une impédance variée par un couple produit au niveau d'un arbre rotatif, et conçu pour détecter le couple en fonction d'une tension de sortie des bobines de détection (13a, 13b), le couvercle unique (1) de culasse étant intercalé entre deux culasses électromagnétiques (11a, 11b) orientées axialement l'une vers l'autre, et ajusté à des circonférences internes des parties cylindriques (11d) des deux culasses électromagnétiques (11a, 11b) afin de retenir les deux culasses électromagnétiques (11a, 11b), le couvercle (1) de culasse comprenant
une pluralité de saillies (1a) alignées de manière circonférentielle, s'étendant radialement vers l'extérieur à partir des circonférences internes des culasses électromagnétiques (11a, 11b), entrant en prise avec une pluralité de parties dent (11c) alignées de manière circonférentielle et agencées au niveau des extrémités orientées l'une vers l'autre des deux culasses électromagnétiques (11a, 11b), afin de venir en butée contre les parties dent (11c), et comportant chacune une surface dentée (A, B) dans une surface d'extrémité axiale (10A, 10B), et
une longueur axiale (L2) de la saillie (1a) est plus courte qu'une longueur axiale (L1) d'une partie circonférentielle interne du couvercle (1) de culasse.

2. Le couvercle (1) de culasse selon la revendication 1, dans lequel la surface dentée (A, B) est une surface pressée obtenue par pression.

3. Dispositif de détection de couple comportant des bobines de détection appariées (13a, 13b) présentant une impédance variée par un couple produit au niveau d'un arbre rotatif, et conçu pour détecter le couple en fonction d'une tension de sortie des bobines de détection (13a, 13b),
le dispositif de détection de couple comprenant en outre le couvercle (1) de culasse selon les revendications 1 ou 2.

4. Dispositif de direction à assistance électrique conçu pour appliquer un couple d'assistance de direction à un système de direction pour automobile,
le dispositif de direction à assistance électrique comprenant le dispositif de détection de couple selon la revendication 3 conçu pour détecter le couple de direction reçu par un mécanisme de direction, et un dispositif de commande de moteur conçu pour entraîner la commande d'un moteur électrique (30) pour l'application du couple d'assistance de direction en fonction du couple de direction détecté par le dispositif de détection de couple.

5. Procédé de production d'un couvercle (1) de culasse pour l'utilisation dans un dispositif de détection de couple comportant des bobines de détection appariées (13a, 13b) présentant une impédance variée par un couple produit au niveau d'un arbre rotatif, et conçu pour détecter le couple en fonction d'une tension de sortie des bobines de détection (13a, 13b), le couvercle unique (1) de culasse étant intercalé entre deux culasses électromagnétiques (11a, 11b) faisant face axialement l'une vers l'autre, et ajusté à des circonférences internes des parties cylindriques (11d) des deux culasses électromagnétiques (11a, 11b) afin de retenir les deux culasses électromagnétiques (11a, 11b), le procédé comprenant
le poinçonnage à pression d'une plaque afin de façonner une forme comportant une pluralité de saillies (1a) alignées de manière circonférentielle, s'étendant radialement vers l'extérieur à partir des circonférences internes des culasses électromagnétiques (11a, 11b), entrant en prise avec une pluralité de parties dent (11c) alignées de manière circonférentielle et agencées au niveau des extrémités faisant face l'un à l'autre des deux culasses électromagnétiques (11a, 11b), afin de venir en butée contre les parties dent (11c), et
l'application de pression sur la surface d'extrémité axiale (10A, 10B) des saillies (1a) et/ou sur une surface d'extrémité radialement distale (10C) de chaque saillie (1a), afin de réguler une longueur axiale (L2) des saillies (1a),
un affaissement de cisaillement (D) étant formé dans les saillies (1a) façonnées par l'intermédiaire du poinçonnage à pression, et l'application de pression amenant une partie munie précédemment de l'affaissement de cisaillement (D) à présenter un rayon de courbure (r1, r2, r3) inférieur à un rayon de courbure (R) de l'affaissement de cisaillement (D).

6. Procédé de production d'un dispositif de direction à assistance électrique configuré pour appliquer un couple d'assistance de direction à un système de direction pour automobile,
le procédé comprenant l'ajustage du couvercle (1) de culasse, produit selon le procédé de production de la revendication 5, aux circonférences internes des parties cylindriques de deux culasses électromagnétiques (11a, 11b) faisant face axialement l'une à l'autre, et la configuration d'un dispositif de détection de couple compris dans le dispositif de direction à assistance électrique.
